# EUROPEAN PATENT APPLICATION

(11) **EP 1 912 149 A1**
(43) Date of publication of application: **16.04.2008**
(21) Application number: 06291584.8
(22) Date of filing: 09.10.2006
(51) Int. Cl.: G06F 21/00

(54) **Monitor mode integrity verification**

(71) Applicant: TEXAS INSTRUMENTS FRANCE, 06271 Villeneuve Loubet Cedex (FR); Texas Instruments Incorporated, Dallas, TX 75251-190 (US)
(72) Inventor: Conti, Gregory Texas Instruments France, 06570 Saint Paul (FR)
(74) Representative: Holt, Michael

(57) **Abstract**

A system (44) comprising a processing logic (46) adapted to activate multiple security levels for the system and a storage (400) coupled to the processing logic via a bus (401), the bus adapted to transfer information between the storage and the processing logic. The system also comprises a monitoring logic (56) coupled to the processing logic and comprising a range of addresses associated with a predetermined security level of the system. The monitoring logic obtains an address associated with the information. If a current security level matches the predetermined security level and if the address does not correspond to the range of addresses, the monitoring logic restricts usage of the system.

## Description

### BACKGROUND OF THE INVENTION

Mobile electronic devices such as personal digital assistants (PDAs) and digital cellular telephones are increasingly used for electronic commerce (e-commerce) and mobile commerce (m-commerce). It is desired for the programs that execute on the mobile devices to implement the e-commerce and m-commerce functionality in a secure mode to reduce the likelihood of attacks by malicious programs and to protect sensitive data.

For security reasons, most processors provide two levels of operating privilege: a lower level of privilege for user programs; and a higher level of privilege for use by the operating system. The higher level of privilege may or may not provide adequate security for m-commerce and e-commerce, however, given that this higher level relies on proper operation of operating systems with vulnerabilities that may be publicized. In order to address security concerns, some mobile equipment manufacturers implement a third level of privilege, or secure mode, that places less reliance on corruptible operating system programs, and more reliance on hardware-based monitoring and control of the secure mode. U.S. Patent Publication No. 2003/0140245, entitled "Secure Mode for Processors Supporting MMU and Interrupts," incorporated herein by reference, describes a hardware-monitored secure mode for processors.

A flexible architecture providing a third level of privilege, such as that described above, may be exploitable by software attacks. Thus, there exists a need for methods and related systems to eliminate the potential for malicious software to manipulate the system into entering a secure mode and executing non-secure instructions.

### BRIEF SUMMARY

Disclosed herein are techniques for verifying the integrity of a secure mode (e.g., monitor mode) of a system. An illustrative embodiment includes a system comprising a processing logic adapted to activate multiple security levels for the system and a storage coupled to the processing logic via a bus, the bus adapted to transfer information between the storage and the processing logic. The system also comprises a monitoring logic coupled to the processing logic and comprising a range of addresses associated with a predetermined security level of the system. The monitoring logic obtains an address associated with the information. If a current security level matches the predetermined security level and if the address does not correspond to the range of addresses, the monitoring logic restricts usage of the system.

Another embodiment includes a system comprising a check logic adapted to obtain an address associated with information transferred between a first storage and a processor, and a second storage comprising a range of addresses associated with a predetermined security level of the system. If the check logic determines that a current security level of the system matches the predetermined security level, and if the check logic determines that the address does not match the range of addresses, the check logic generates an alert signal.

Yet another embodiment includes a method that comprises obtaining an address associated with information transferred between a storage and a processing logic, the processing logic associated with a current security level. The method also includes determining whether the address corresponds to a range of addresses associated with a predetermined security level, and determining whether a current security level associated with the processing logic corresponds to the predetermined security level. The method also includes, if the current security level corresponds to the predetermined security level, and if the address does not correspond to the range of addresses, generating an alert signal.

### NOTATION AND NOMENCLATURE

Certain terms are used throughout the following description and claims to refer to particular system components. As one skilled in the art will appreciate, various companies may refer to a component by different names. This document does not intend to distinguish between components that differ in name but not function. In the following discussion and in the claims, the terms "including" and "comprising" are used in an open- ended fashion, and thus should be interpreted to mean "including, but not limited to." Also, the term "couple" or "couples" is intended to mean either an indirect or direct connection. Thus, if a first device couples to a second device, that connection may be through a direct connection, or through an indirect connection via other devices and connections.

### BRIEF DESCRIPTION OF THE DRAWINGS

For a more detailed description of the preferred embodiments of the invention, reference will now be made to the accompanying drawings, wherein:
Figure 1 shows a computing system constructed in accordance with at least some embodiments of the invention;
Figure 2 shows a portion of the megacell of Figure 1 in greater detail, and in accordance with embodiments of the invention;
Figure 3 shows various security modes used by the system of Figure 1, in accordance with embodiments of the invention;
Figure 4A shows a detailed view of the megacell of Figure 2, in accordance with preferred embodiments of the invention;
Figure 4B shows a storage associated with the megacell of Figure 4A, in accordance with embodiments of the invention; and
Figure 5 shows a flow diagram of an illustrative method in accordance with embodiments of the invention.

### DETAILED DESCRIPTION OF THE PREFERRED EMBODIMENTS

The following discussion is directed to various embodiments of the invention. Although one or more of these embodiments may be preferred, the embodiments disclosed should not be interpreted, or otherwise used, as limiting the scope of the disclosure, including the claims, unless otherwise specified. In addition, one skilled in the art will understand that the following description has broad application, and the discussion of any embodiment is meant only to be illustrative of that embodiment, and not intended to intimate that the scope of the disclosure, including the claims, is limited to that embodiment.

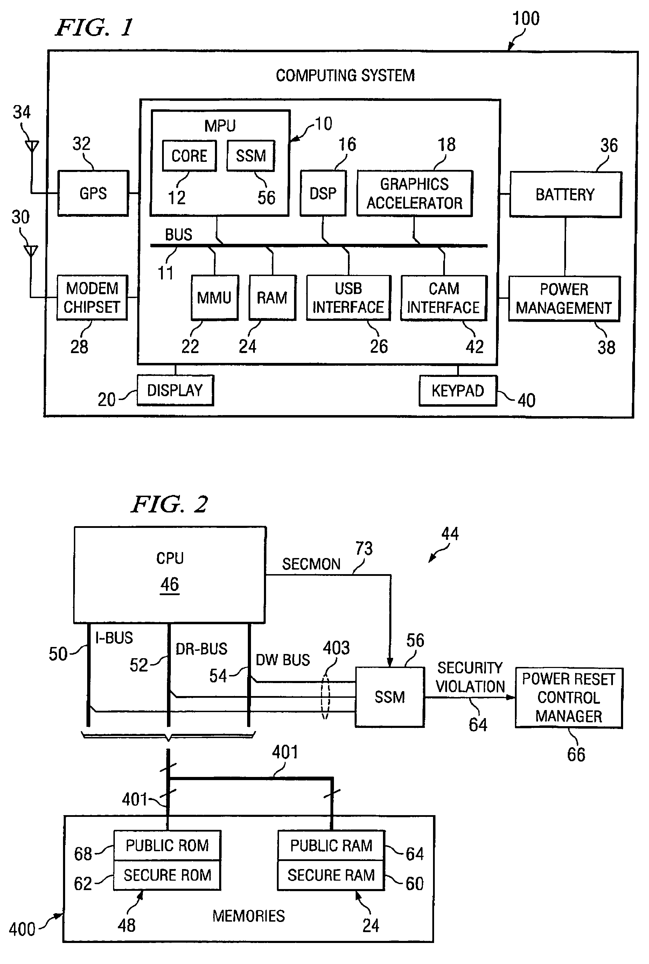

Figure 1 shows a computing system 100 constructed in accordance with at least some embodiments of the invention. The computing system 100 preferably comprises the ARM^{®} TrustZone^{®} architecture, but the scope of disclosure is not limited to any specific architecture. The computing system 100 may comprise a multiprocessing unit (MPU) 10 coupled to various other system components by way of a bus 11. The MPU 10 may comprise a processor core 12 that executes applications, possibly by having one or more processing pipelines. The MPU 10 may further comprise a security state machine (SSM) 56 which, as will be more fully discussed below, aids in allowing the computer system 100 to enter a secure mode for execution of secure software, such as m-commerce and e-commerce software.

The computing system 100 may further comprise a digital signal processor (DSP) 16 that aids the MPU 10 by performing task-specific computations, such as graphics manipulation and speech processing. A graphics accelerator 18 may couple both to the MPU 10 and DSP 16 by way of the bus 11. The graphics accelerator 18 may perform necessary computations and translations of information to allow display of information, such as on display device 20. The computing system 100 may further comprise a memory management unit (MMU) 22 coupled to random access memory (RAM) 24 by way of the bus 11. The MMU 22 may control access to and from the RAM 24 by any of the other system components such as the MPU 10, the DSP 16 and the graphics accelerator 18. The RAM 24 may be any suitable random access memory, such as synchronous RAM (SRAM) or RAMBUS ^{™}-type RAM.

The computing system 100 may further comprise a USB interface 26 coupled to the various system components by way of the bus 11. The USB interface 26 may allow the computing system 100 to couple to and communicate with external devices.

The SSM 56, preferably a hardware-based state machine, monitors system parameters and allows the secure mode of operation to initiate such that secure programs may execute from and access a portion of the RAM 24. Having this secure mode is valuable for any type of computer system, such as a laptop computer, a desktop computer, or a server in a bank of servers. However, in accordance with at least some embodiments of the invention, the computing system 100 may be a mobile (e.g., wireless) computing system such as a cellular telephone, personal digital assistant (PDA), text messaging system, and/or a computing device that combines the functionality of a messaging system, personal digital assistant and a cellular telephone. Thus, some embodiments may comprise a modem chipset 28 coupled to an external antenna 30 and/or a global positioning system (GPS) circuit 32 likewise coupled to an external antenna 34.

Because the computing system 100 in accordance with at least some embodiments is a mobile communication device, computing system 100 may also comprise a battery 36 which provides power to the various processing elements. The battery 36 may be under the control of a power management unit 38. A user may input data and/or messages into the computing system 100 by way of the keypad 40. Because many cellular telephones also comprise the capability of taking digital still and video pictures, in some embodiments the computing system 100 may comprise a camera interface 42 which may enable camera functionality, possibly by coupling the computing system 100 to a charge couple device (CCD) array (not shown) for capturing digital images.

Inasmuch as the systems and methods described herein were developed in the context of a mobile computing system 100, the remaining discussion is based on a mobile computing environment. However, the discussion of the various systems and methods in relation to a mobile computing environment should not be construed as a limitation as to the applicability of the systems and methods described herein to just mobile computing environments.

In accordance with at least some embodiments of the invention, many of the components illustrated in Figure 1, while possibly available as individual integrated circuits, are preferably integrated or constructed onto a single semiconductor die. Thus, the MPU 10, digital signal processor 16, memory controller 22 and RAM 24, along with some or all of the remaining components, are preferably integrated onto a single die, and thus may be integrated into a computing device 100 as a single packaged component. Having multiple devices integrated onto a single die, especially devices comprising a multiprocessor unit 10 and RAM 24, may be referred to as a system-on-a-chip (SoC) or a megacell 44. While using a system-on-a-chip may be preferred, obtaining the benefits of the systems and methods as described herein does not require the use of a system-on-a-chip.

Figure 2 shows a portion of the megacell 44 in greater detail. The megacell 44 comprises CPU 46 which couples to security state machine (SSM) 56 by way of a security monitoring (SECMON) bus 73, also described below. The CPU 46 couples to memories 400 comprising the RAM 24 and ROM 48 by way of an instruction bus 50, a data read bus 52 and a data write bus 54. The buses 50, 52 and 54 are collectively referred to as "bus 401." The instruction bus 50 may be used by the CPU 46 to fetch instructions for execution from one or both of the RAM 24 and ROM 48. Data read bus 52 may be the bus across which data reads from RAM 24 propagate. Likewise, data writes from the CPU 46 may propagate along data write bus 54 to the RAM 24. Buses 50, 52 and 54 couple to the SSM 56 by way of a group of connections collectively referred to as "bus 403."

The ROM 48 and the RAM 24 are partitioned into public and secure domains. Specifically, the ROM 48 comprises a public ROM 68, accessible in non-secure mode, and a secure ROM 62, accessible in secure mode. Likewise, the RAM 24 comprises a public RAM 64, accessible in non-secure mode, and a secure RAM 60, accessible in secure mode. In at least some embodiments, the public and secure domain partitions in the ROM 48 and the RAM 24 are virtual (i.e., non-physical) partitions generated and enforced by a memory management unit (not specifically shown) in the CPU 46.

Secure ROM 62 and secure RAM 60 preferably are accessible only in secure mode. In accordance with embodiments of the invention, the SSM 56 monitors the entry into, execution during and exiting from the secure mode. The SSM 56 preferably is a hardware-based state machine that monitors various signals within the computing system 100 (e.g., instructions on the instruction bus 50, data writes on the data write bus 52 and data reads on the data read bus 54) and activity in the CPU 46 through SECMON bus 73.

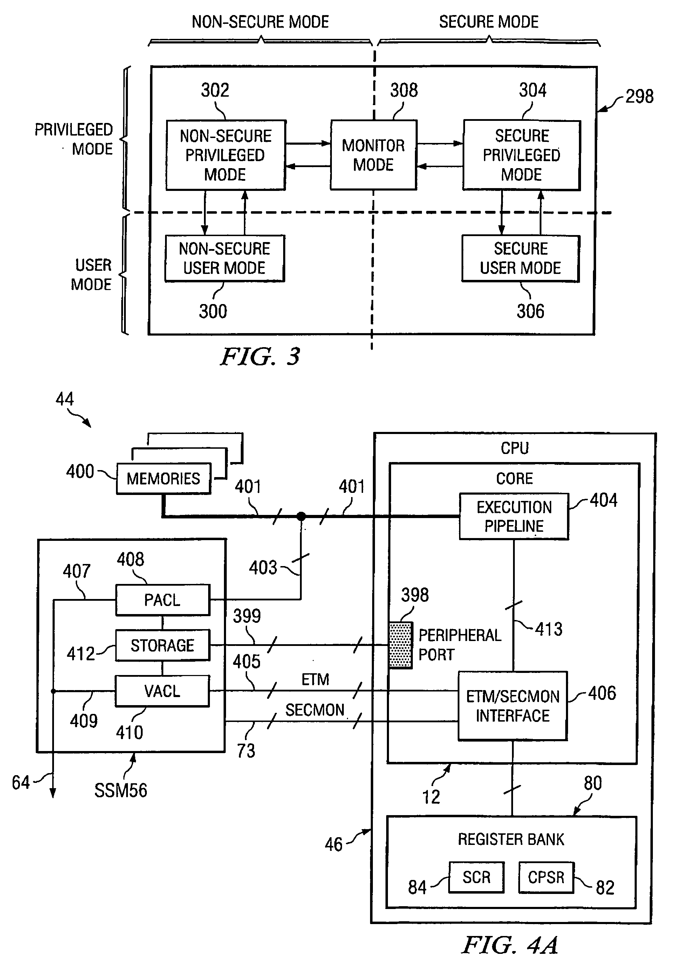

Each of the secure and non-secure modes may be partitioned into "user" and "privileged" modes. Programs that interact directly with an end-user, such as a web browser, are executed in the user mode. Programs that do not interact directly with an end-user, such as the operating system (OS), are executed in the privileged mode. By partitioning the secure and non-secure modes in this fashion, a total of four modes are made available. As shown in Figure 3, in order of ascending security level, these four modes include the non-secure user mode 300, the non-secure privileged mode 302, the secure user mode 306, and the secure privileged mode 304. There is an intermediate monitor mode 308, described further below, between the modes 302 and 304. The computer system 100 may operate in any one of these five modes at a time.

The computer system 100 may switch from one mode to another. Figure 3 illustrates a preferred mode-switching sequence 298. The sequence 298 is preferred because it is more secure than other possible switching sequences. For example, to switch from the non-secure user mode 300 to the secure privileged mode 304, the system 100 should first pass through non-secure privileged mode 302 and the monitor mode 308. Likewise, to pass from the secure user mode 306 to the non-secure user mode 300, the system 100 should switch from the secure user mode 306 to the secure privileged mode 304, from the secure privileged mode 304 to the monitor mode 308, from the monitor mode 308 to the non-secure privileged mode 302, and from the non-secure privileged mode 302 to the non-secure user mode 300.

Each mode switch is enacted by the adjustment of bits in the CPSR 82 and the SCR 84. The CPSR 82 comprises a plurality of mode bits. The status of the mode bits determines which mode the computer system 100 is in. Each mode corresponds to a particular combination of mode bits. The mode bits may be manipulated to switch modes. For example, the bits may be manipulated to switch from mode 300 to mode 302.

The SCR 84 comprises a non-secure (NS) bit. The status of the NS bit determines whether the computer system 100 is in secure mode or non-secure mode. In at least some embodiments, an asserted NS bit indicates that the system 100 is in non-secure mode. In other embodiments, an asserted NS bit indicates that the system 100 is in secure mode. Adjusting the NS bit switches the system 100 between secure and non-secure modes. Because the status of the NS bit is relevant to the security of the system 100, the NS bit preferably is adjusted only in the monitor mode 308, since the monitor mode 308 is, in at least some embodiments, the most secure mode.

More specifically, when the system 100 is in the monitor mode 308, the core 12 executes monitor mode software (not specifically shown) on the secure ROM 62, which provides a secure transition from the non-secure mode to the secure-mode, and from the secure mode to the non-secure mode. In particular, the monitor mode software performs various security tasks to prepare the system 100 for a switch between the secure and non-secure modes. The monitor mode software may be programmed to perform security tasks as desired. If the core 12 determines that these security tasks have been properly performed, the monitor mode software adjusts the NS bit in the SCR register 84, thereby switching the system 100 from non-secure mode to secure mode, or from secure mode to non-secure mode. The mode of the system 100 is indicated by the signal on SECMON 73, show in Figure 2.

Figure 4A shows a detailed view of the megacell 44 of Figure 2. As shown in Figure 4A, the memories 400 couple to CPU 46 via instruction bus 401. The memories 400 also couple to SSM 56 via instruction buses 401 and 403. The CPU 46 comprises core 12 and the register bank 80 having CPSR register 82 and SCR register 84. The core 12 comprises an execution pipeline 404 which couples to an embedded trace macro cell (ETM)/SECMON interface 406 via bus 413. The interface 406 couples to the SSM 56 via ETM bus 405 and SECMON bus 73, which the interface 406 receives from the register bank 80. The SSM 56 comprises a physical address check logic (PACL) 408 and a virtual address check logic (VACL) 410. Both the PACL 408 and the VACL 410 couple to a storage 412. The storage 412 may comprise any suitable storage, e.g., registers, ROM, etc. The contents of the storage 412 may be modified by the core 12 via peripheral port 398 and bus 399 while the system 100 is in monitor mode. Both the PACL 408 and the VACL 410 are capable of generating security violation signals via buses 407 and 409, respectively.

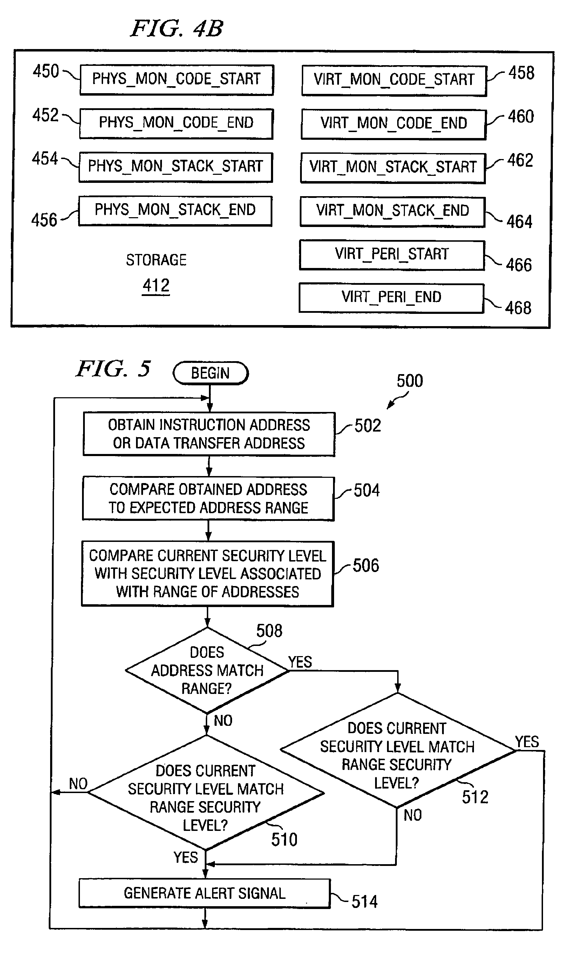

Figure 4B shows a detailed view of the storage 412. Specifically, the storage 412 comprises a plurality of storage units (e.g., registers). The PACL 408 and the VACL 410 use the contents of these registers to verify the integrity of the monitor mode, as described further below. The storage 412 includes a PHYS_MON_CODE_START register 450 and a PHYS_MON_CODE_END register 452. These registers specify the physical start and end memory addresses, respectively, associated with the monitor code stored in the memories 400. The storage 412 further includes a PHYS_MON_STACK_START register 454 and a PHYS_MON_STACK_END register 456. These registers specify the physical start and end memory addresses, respectively, associated with a dedicated monitor mode stack stored in the memories 400. The storage 412 further includes a VIRT_MON_CODE_START register 458 and a VIRT_MON_CODE_END register 460. These registers specify the start and end virtual addresses, respectively, associated with the virtual memory space that is associated with the monitor mode code stored in the memories 400. The storage 412 still further comprises a VIRT_MON_STACK_START register 462 and a VIRT_MON_STACK_END register 464. These registers specify the start and end virtual addresses, respectively, associated with the virtual memory space that is associated with the dedicated monitor-mode stack stored in the memories 400. The storage 412 also comprises a VIRT_PERI_START register 466 and a VIRT_PERI_END register 468. These registers specify the start and end virtual addresses, respectively, associated with the virtual memory space associated with the peripheral port 398.

In accordance with embodiments of the invention, the PACL 408 uses the bus 403 to obtain data associated with each instruction (or other type of data) the core 12 fetches from the memories 400. The PACL 408 ensures that any instruction fetch or data transfer occurring in monitor mode (i.e., as determined using the SECMON bus 73) is associated with a memory address that falls within an expected range of memory addresses. The expected range of memory addresses is programmed into the storage 412, e.g., into registers 450, 452, 454 and 456.

As the core 12 fetches an instruction from the memories 400 via instruction bus 401, the PACL 408 obtains an address associated with the instruction using bus 403. The PACL 408 compares the address associated with the instruction to the expected range of physical memory addresses stored in the registers 450 and 452. If a match occurs, the PACL 408 does not take any action. However, if the address associated with the instruction does not fall within the expected range of addresses, and if the PACL 408 determines (i.e., using the SECMON bus 73) that the system 100 is in monitor mode, the PACL 408 generates a security violation signal on bus 407 that is transferred to the power reset control manager 66. In response to the security violation signal, the power reset control manager 66 may reset the system 100. The SSM 56 also may take any of a variety of alternative actions to protect the computer system 100. Examples of such protective actions are provided in the commonly owned patent application entitled, "System and Method of Identifying and Preventing Security Violations Within a Computing System," U.S. Patent Application No. 10/961,748, incorporated herein by reference. In some embodiments, the PACL 408 monitors the physical memory addresses associated with any suitable data obtained from any of the memories 400 for use by the core 12.

In addition to monitoring instructions fetched while the system 100 is in monitor mode, the PACL 408 also may monitor write accesses present on the bus 401 whereby the core 12 writes data to one of the memories 400. Specifically, the PACL 408 ensures that the core 12 does not write data to a monitor mode memory stack in the memories 400 if the core 12 is not in monitor mode. Using bus 403, the PACL 408 obtains the destination memory address associated with a write access on the bus 401. If the PACL 408 is not in monitor mode and if the destination memory address falls within a range of addresses in the memories 400 reserved for use as a dedicated monitor mode stack (i.e., as specified by the registers 454 and 456), the PACL 408 may generate a security violation signal via bus 407. The security violation signal may be handled as described above. If the PACL 408 determines that the system is in monitor mode, then no security violation signal is generated.

As described, the PACL 408 ensures that while the system 100 is in monitor mode, instructions fetched from memories 400 are secure and safe to use in the monitor mode. However, it is possible that the instructions that are fetched from the memories 400 are not the instructions that are actually executed by the core 12. Accordingly, the VACL 410 ensures not only that instructions executed by the core 12 are safe to execute in monitor mode, but also that the instructions are properly executed.

To this end, the megacell 44 may comprise one or more virtual memories (not represented in Figure 4A) usable by the core 12 while executing software code. While executing an instruction, any virtual address associated with that instruction is transferred from the execution pipeline 404 to the interface 406. In turn, the interface 406 transfers the virtual address to the VACL 410 via ETM bus 405 for security clearance. The VACL 410 ensures that the instruction, if executed in monitor mode (e.g., as determined by the SECMON bus 73), has a virtual address that falls within an expected range of virtual memory addresses. The expected range of virtual memory addresses is programmed into the storage 412 (i.e., registers 458 and 460). Thus, the VACL 410 receives the virtual address from the interface 406 via ETM bus 405 and compares the virtual address with the expected range of virtual memory addresses stored in the registers 458 and 460. If a match is found, the VACL 410 does not take any action. However, if the received virtual address does not fall within the range of expected addresses, and if the VACL 410 determines (using the SECMON bus 73) that the system 100 is in monitor mode, the VACL 410 issues a security violation signal via bus 409. The security violation signal is sent to the power reset control manager 66. In response to the security violation signal, the power reset control manager 66 may reset the system 100. The SSM 56 also may take any of a variety of alternative actions to protect the computer system 100. Examples of such protective actions are provided in the commonly owned patent application referenced above (Patent Application No. 10/961,748).

As previously mentioned, the VACL 410 ensures not only that an instruction being executed by the core 12 is safe to execute in monitor mode, but also that the instruction is properly executed. Accordingly, the ETM bus 405 generated by the interface 406 indicates the execution status and any error flags associated with each instruction executed in the execution pipeline 404 while in monitor mode. The specific data used to verify execution status and execution errors may vary from implementation to implementation. Such verification may include determining whether a monitor mode instruction was valid, whether data associated with the instruction was valid, etc.

In addition to the functions described above, the VACL 410 also ensures that when the system 100 is in monitor mode, data transfers (e.g., read/write operations) occur only to or from monitor mode code in the memories 400, to or from the dedicated monitor mode stack area in the memories 400, or to or from dedicated registers (e.g., the registers in storage 412) on the peripheral port 398. As described above, the execution pipeline 404 transfers the virtual address associated with each data transfer, if any, to the interface 406 via bus 413. The virtual address is transferred to the VACL 410 via the ETM bus 405. In turn, the VACL 410 determines whether the virtual address associated with the data transfer falls within one of the virtual address ranges specified by the registers 458, 460, 462, 464, 466 or 468. If the virtual address falls within one of these virtual address ranges, the VACL 410 does not take action. However, if the virtual address does not fall within one of these virtual address ranges, and further if the VACL 410 determines (using the SECMON bus 73) that the system 100 is in monitor mode, the VACL 410 issues a security violation signal via bus 409, as previously described.

The VACL 410 also ensures that data transfers are properly executed while the system 100 is in monitor mode. Specifically, in addition to the information described above, the ETM bus 405 also transfers to the VACL 410 execution information associated with each data transfer performed by the core 12. Such execution information may include execution status, error flags, etc. The particular execution information provided to the VACL 410 regarding the execution of a data transfer may vary from implementation to implementation.

Figure 5 shows a flow diagram of a method 500 in accordance with embodiments of the invention. The method 500 is applicable to operations of both the PACL 408 and the VACL 410. The method 500 begins by obtaining an instruction address or data transfer address (block 502). The instruction or data address may comprise a physical memory address or a virtual memory address. The method 500 also comprises comparing the obtained address to an expected address range (block 504). The expected address range is stored in one of the registers of the storage 412, as previously described. The method 500 further comprises comparing a current security level of the system with the security level associated with the address range (block 506). For example, the method 500 may determine whether the system is in monitor mode, since at least some of the registers stored in the storage 412 comprise address ranges associated with the monitor mode.

If the address falls within the range of addresses (block 508), and if the current security level of the system matches the security level associated with the range (block 512), the method 500 comprises generating an alert signal (block 514). Similarly, if the address does not match the range of addresses (block 508), and if the current security level of the system matches the security level associated with the range of addresses (block 510), the method 500 comprises generating the alert signal (block 514).

The above discussion is meant to be illustrative of the principles and various embodiments of the invention. Numerous variations and modifications will become apparent to those skilled in the art once the above disclosure is fully appreciated. It is intended that the claimed invention be interpreted to embrace all such variations and modifications.

## Claims

1. A system, comprising:
a processing logic adapted to activate multiple security levels for the system;
a storage coupled to the processing logic via a bus, said bus adapted to transfer information between said storage and said processing logic; and
a monitoring logic coupled to the processing logic and comprising a range of addresses associated with a predetermined security level of the system;
wherein the monitoring logic obtains an address associated with said information;
wherein, if a current security level matches said predetermined security level and if said address does not correspond to said range of addresses, the monitoring logic restricts usage of the system.

2. The system of claim 1, wherein, if the current security level does not match said predetermined security level and if said address corresponds to said range of addresses, the monitoring logic restricts usage of the system.

3. The system of claim 2, wherein said information comprises data written to said storage, and wherein said address comprises a destination address to which the data is written.

4. The system of claim 3, wherein said destination address corresponds to a memory stack in said storage, the memory stack dedicated to the predetermined security level.

5. The system of any preceding claim, wherein said information comprises an instruction fetched from the storage, and wherein said address comprises a memory address from which the instruction is fetched.

6. The system of claim 5, wherein the monitoring logic uses execution data received from the processing logic to determine whether the instruction is executed in accordance with predetermined requirements.

7. A method, comprising:
obtaining an address associated with information transferred between a storage and a processing logic, said processing logic associated with a current security level;
determining whether said address corresponds to a range of addresses associated with a predetermined security level;
determining whether a current security level associated with said processing logic corresponds to said predetermined security level; and
wherein, if the current security level corresponds to said predetermined security level, and if said address does not correspond to said range of addresses, generating an alert signal.

8. The method of claim 7, wherein, if the current security level does not correspond to said predetermined security level, and if said address corresponds to said range of addresses, generating the alert signal.

9. The method of claim 7, wherein obtaining the address associated with the information comprises obtaining an address associated with an instruction fetched from the storage.

10. The method of claim 7, wherein obtaining said address comprises obtaining a virtual address associated with an instruction executed by the processing logic, and further comprising generating the alert signal if the instruction does not match said information.
